# EUROPÄISCHE PATENTANMELDUNG

(11) **EP 1 752 682 A1**
(43) Veröffentlichungstag der Anmeldung: **14.02.2007**
(21) Anmeldenummer: 06015419.2
(22) Anmeldetag: 25.07.2006
(51) Int. Cl.: F16F 1/16, F16D 3/12

(54) **Torsionsschwingungsdämpfer oder Dekoppler für eine Antriebsscheibe mit in einer Hohlwelle montierter Torsionsfeder**

(30) Priorität: 09.08.2005 DE 102005037996
(71) Anmelder: Muhr und Bender KG, 57439 Attendorn (DE)
(72) Erfinder: Kobelev, Vladimir, Dr.rer.nat., 57439 Attendorn (DE)
(74) Vertreter: Neumann, Ernst Dieter

(57) **Zusammenfassung**

Dekoppler für eine Antriebsscheibe 20, die mit einer Antriebswelle 13 über eine Torsionsfeder 31 zur Drehmomentübertragung verbunden ist, wobei das Ende der Antriebswelle 13 als Hohlwelle 12 ausgebildet ist, die Torsionsfeder 31 stabförmig ist und mit einem Ende in der Antriebswelle 13 und mit dem anderen Ende an der Antriebsscheibe 20 drehfest festgelegt ist und wobei mit der Antriebsscheibe 20 eine Lagerhülse 21 fest verbunden ist, die sich gegenüber dem freien Ende der Hohlwelle 12 frei drehbar abstützt.

## Beschreibung

Die Erfindung betrifft einen Torsionsschwingungsdämpfer oder Dekoppler für eine Antriebsscheibe, die mit einer Antriebswelle über ein Federungs- und Dämpfungselement zu Zwecken der Drehmomentübertragung verbunden ist. Der Antrieb kann hierbei von der Antriebsscheibe auf die Antriebswelle oder von der Antriebswelle auf die Antriebsscheibe erfolgen. Die genannten Antriebswellen können hierbei z.B. Kurbelwellen oder Nockenwellen von Verbrennungsmotoren sein, wobei über die Antriebsscheibe Nebenantriebe angetrieben werden. Aufgrund der periodischen Arbeitsweise von Verbrennungsmotoren oder beispielsweise auch von Kolbenverdichtern entstehen an den Wellenenden Ungleichförmigkeiten in der Winkelgeschwindigkeit und im Drehmoment, die durch Schwingungs- und Resonanzerscheinungen der Wellen noch verstärkt werden können. Um diese Ungleichförmigkeiten im Antrieb zu den Nebenantrieben zu dämpfen, sind in bekannten Antriebsscheiben Feder- und Dämpferelemente aus Elastomeren üblich, die in einem Bauteil Dämpfungs- und Federungswirkung vereinen. Das Elastomer als Werkstoff des Feder- und Dämpferelements weist eine Reihe von Nachteilen auf.

Die Steifigkeit und damit die Eigenfrequenz des Elements hängt stark von der Umgebungstemperatur ab, was eine Verstimmung der Dämpfungswirkung zur Folge haben kann.

Das Material des Elements unterliegt einem Alterungsprozeß. Das Material härtet mit der Zeit aus, was eine weitere Verstimmung der Dämpfung verursachen kann.

Elastomere sind anfällig gegenüber Umgebungseinflüssen, insbesondere von aggressiven Flüssigkeiten oder Ölen sowie von Gasen, die im Bereich von Verbrennungsmotoren vorliegen.

Die Dämpfungseigenschaften sind vom Elastomer abhängig und lassen sich nur in begrenzten Maßen variieren.

Die Feder- und Dämpferelemente aus Elastomer benötigen einen relativ großen Bauraum.

Hiervon ausgehend ist es Aufgabe der vorliegenden Erfindung, einen Dekoppler für eine Anordnung aus einer Antriebsscheibe und einer Antriebswelle vorzuschlagen, der kompakt baut und gleichbleibend gute und frei wählbare Feder- und Dämpfungseigenschaften aufweist.

Die Lösung hierfür besteht in einem Dekoppler für eine Antriebsscheibe, die mit einer Antriebswelle über eine Torsionsfeder zur Drehmomentübertragung verbunden ist, wobei das Ende der Antriebswelle als Hohlwelle ausgebildet ist,
die Torsionsfeder stabförmig ist und mit einem Ende in der Antriebswelle und mit dem anderen Ende an der Antriebsscheibe drehfest festgelegt ist und
wobei mit der Antriebsscheibe eine Lagerhülse fest verbunden ist, die sich gegenüber dem freien Ende der Hohlwelle frei drehbar abstützt.

Durch die Verwendung einer stabförmigen Torsionsfeder innerhalb einer Hohlwelle wird eine sehr kompakte Bauform realisiert, die die Wirkung der Federung und der Dämpfung ebenfalls in einem Bauteil vereint. Die aus Metall bestehende Torsionsfeder garantiert eine lange Lebensdauer, unabhängig von Temperatur- und anderen Umgebungseinflüssen. Die Anzahl der Bauteile ist gering und die Anordnung damit kostengünstig. Der Werkstoff der Feder- und Dämpfereinheit garantiert eine hohe Dämpferleistung bei gleichzeitig guter Wärmeabführung.

In bevorzugter Ausführung kann die Torsionsfeder aus einem Stabbündel aus Einzelstäben bestehen, insbesondere aus Sechskantstäben zusammengesetzt sein.

Hierbei führt die Torsion der Feder zu einer relativen Gleitbewegung zwischen den einzelnen Stäben im Stabbündel, so daß die Dämpfungswirkung erhöht wird.

Alternativ ist es möglich, daß die Torsionsfeder als Massivteil ausgeführt ist, wobei sie als Vollstab oder als Hohlstab ausgeführt sein kann. Weiter wird vorgeschlagen, daß sie insbesondere einen im Querschnitt runden Mittelabschnitt und vielkantige Endabschnitte hat. Die Dämpfung erfolgt in diesem Fall als innere Dämpfung im Stababschnitt.

In beiden genannten Ausführungsformen wird die Feder in bevorzugter Weise formschlüssig im Drehsinn in der Antriebswelle einerseits und in der Antriebsscheibe andererseits festgelegt.

In vorteilhafter konstruktiver Ausführung ist auf der Antriebswelle, insbesondere im Bereich der Hohlwelle, eine Lagerhülse festgelegt, die mit der Lagerhülse der Antriebsscheibe abstützend zusammenwirkt, wobei hier bei freier Drehbarkeit Biegekräfte abgefangen werden können. Nach einer ersten Alternative ist vorgesehen, daß ein Lagerabschnitt der Lagerhülse die innenliegende Lagerhülse der Antriebsscheibe außen umgibt; nach einer anderen Alternative wird vorgeschlagen, daß ein Lagerabschnitt der Lagerhülse in der außenliegenden Lagerhülse der Antriebsscheibe innen einliegt.

Bevorzugt sind zusätzliche Lagermittel, insbesondere eine Gleitlagerbuchse zwischen Lagerhülse auf der Antriebswelle und Lagerhülse an der Antriebsscheibe vorgesehen. Die Verwendung eines Nadellagers ist nicht ausgeschlossen. Es ist freibleibend, an welcher der beiden Lagerhülsen die Lagermittel festgelegt werden. Zwischen der Lagerhülse und der Antriebsscheibe können Axialsicherungsmittel vorgesehen sein, die eine relative Drehbarkeit der beiden Teile zueinander garantieren, jedoch eine Unverlierbarkeit der Antriebsscheibe auf der Lagerhülse sicherstellen. Derartige Axialsicherungsmittel können durch übergreifende Bunde, Sprengringe oder dergleichen verwirklicht werden.

Die genannte Lagerhülse auf der Antriebswelle kann auf einem Befestigungsabschnitt im Bereich der Hohlwelle der Antriebswelle aufgeschraubt sein. Die Festlegung im Preßsitz ist ebenso möglich.

Bevorzugte Ausführungsbeispiele der Erfindung sind in den Zeichnungen dargestellt und werden nachstehend beschrieben.
- Figur 1: zeigt einen Torsionsschwingungsdämpfer in einem Teilschnitt in isometrischer Darstellung in einer ersten Ausführungsform;
- Figur 2: zeigt den Torsionsschwingungsdämpfer nach Figur 1 in Explosionsdarstellung (Figur 9);
- Figur 3: zeigt die Einzelheiten des Torsionsschwingungsdämpfers nach den Figuren 1 und 2 (Figur 8);
- Figur 4: zeigt einen Torsionsschwingungsdämpfer in einem Teilschnitt in isometrischer Darstellung in einer zweiten Ausführungsform;
- Figur 5: zeigt den Torsionsschwingungsdämpfer nach Figur 4 in Explosionsdarstellung;
- Figur 6: zeigt die Einzelheiten des Torsionsschwingungsdämpfers nach den Figuren 4 und 5;
- Figur 7: zeigt einen Torsionsschwingungsdämpfer in einem Teilschnitt in isometrischer Darstellung in einer dritten Ausführungsform;
- Figur 8: zeigt den Torsionsschwingungsdämpfer nach Figur 7 in Explosionsdarstellung;
- Figur 9: zeigt die Einzelheiten des Torsionsschwingungsdämpfers nach den Figuren 7 und 8;
- Figur 10: zeigt einen Torsionsschwingungsdämpfer in einem Teilschnitt in isometrischer Darstellung in einer vierten Ausführungsform;
- Figur 11: zeigt den Torsionsschwingungsdämpfer nach Figur 4 in Explosionsdarstellung;
- Figur 12: zeigt die Einzelheiten des Torsionsschwingungsdämpfers nach den Figuren 4 und 5.

In allen Darstellungen sind an den Teilen Sektoren von etwa 90° Umfangswinkel ausgebrochen dargestellt.

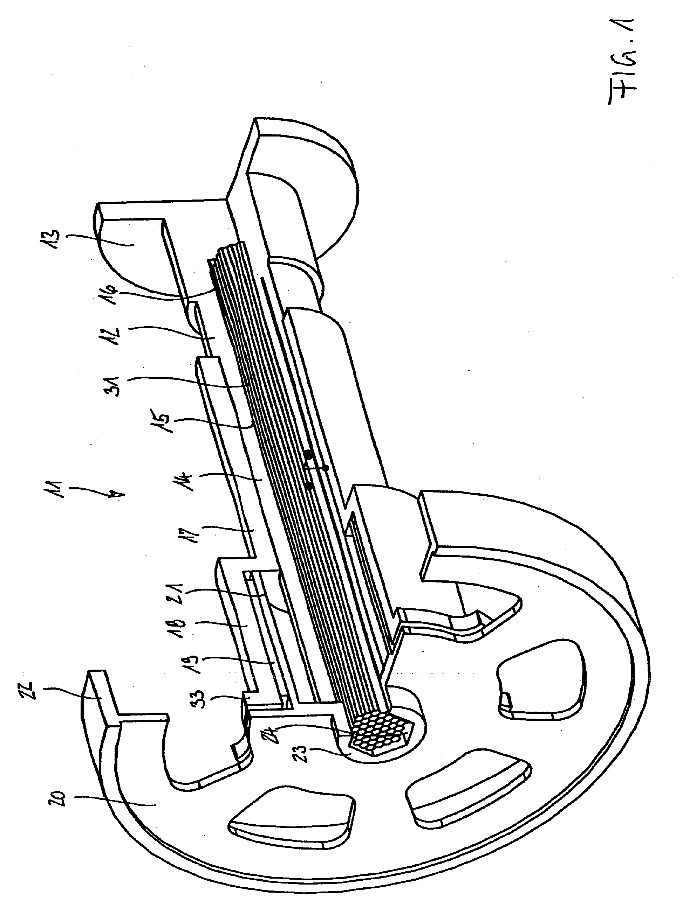

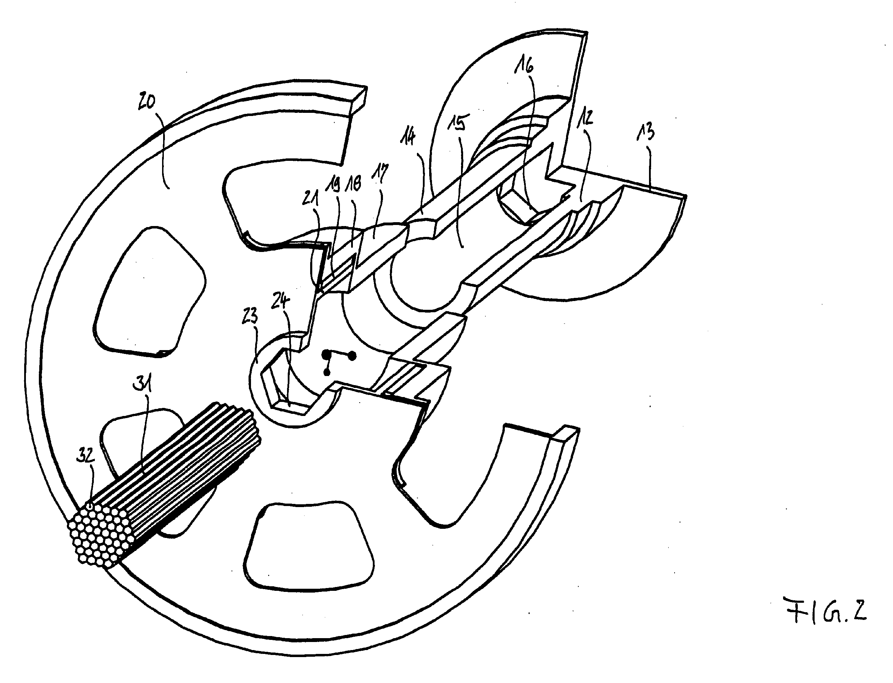

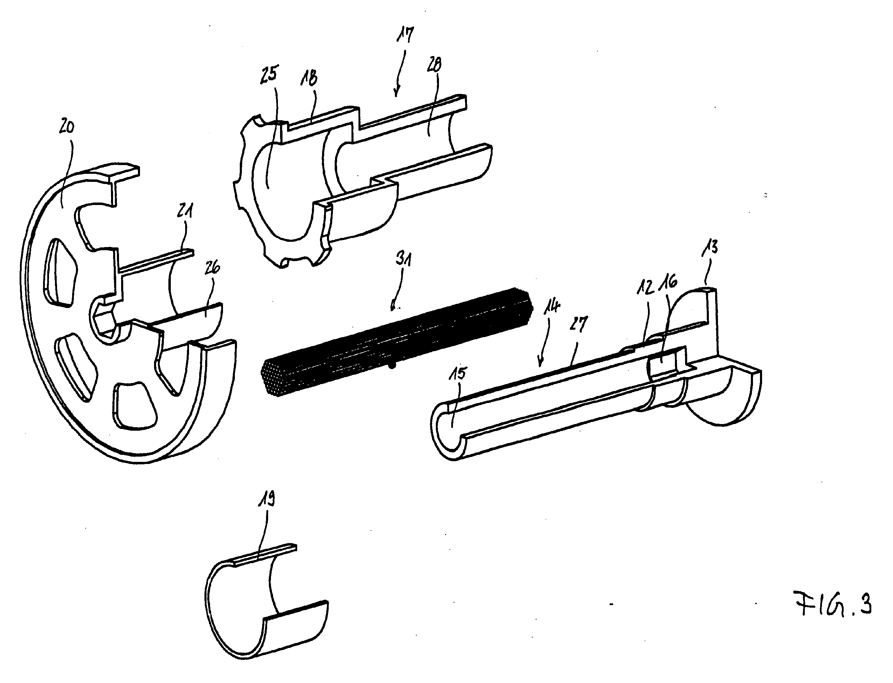

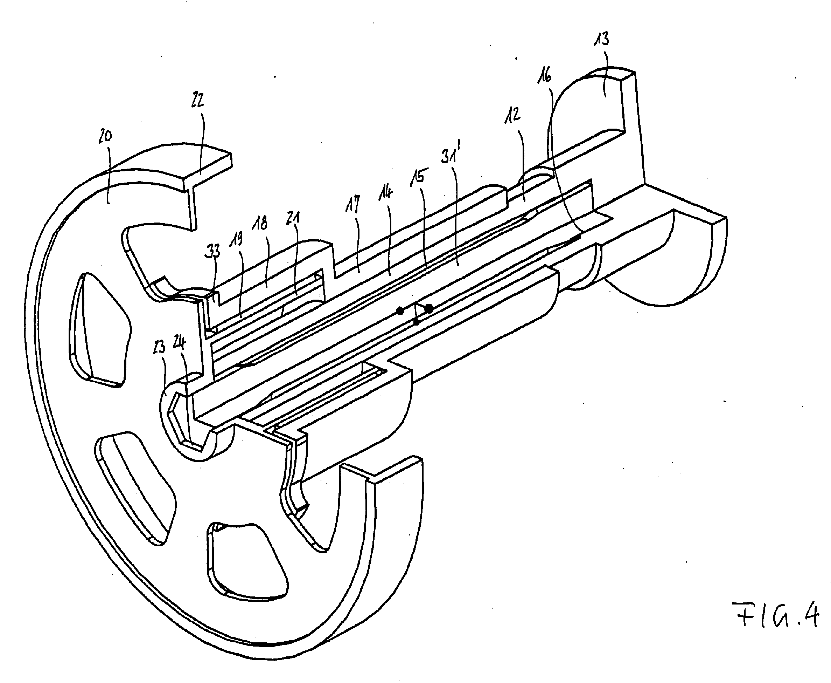

In Figur 1 ist ein erfindungsgemäßer Torsionsschwingungsdämpfer 11 dargestellt, der mit dem Ende einer Antriebswelle 13 verbunden ist. Die Antriebswelle 13 ist als flanschartige Durchmessererweiterung dargestellt, die tatsächlich integral mit der Antriebswelle, z.B. einer Kurbelwelle ausgebildet ist. Das freie Ende der Antriebswelle 13 ist als Hohlwelle 12 ausgeführt, wobei am inneren Ende eines inneren Hohlraums 15 Formschlußmittel 16 vorgesehen sind, die als Innensechskant ausgebildet sind. Auf einen Befestigungsabschnitt 14 der Antriebswelle 13 ist eine Lagerhülse 17 verdrehfest aufgeschraubt, wobei die Gewindesteigung im Verhältnis zur Drehrichtung der Antriebswelle 13 so gewählt ist, daß das Gewinde im Betrieb angezogen wird. Die Lagerhülse 17 könnte auch im Preßsitz oder in anderer geeigneter Weise auf dem Befestigungsabschnitt 14 festgelegt werden. Ein erweiterter Lagerabschnitt 18 der Lagerhülse 17 nimmt eine Gleitlagerbuchse 19 auf, in der eine Antriebsscheibe 20 mittels einer angesetzten Lagerhülse 21 drehbar gelagert ist. Der Lagerabschnitt 18 wird von einem Flansch 33 nächst der Antriebsscheibe begrenzt. Mit hier nicht näher dargestellten Mitteln können der Lagerabschnitt 18 und die Antriebsscheibe 20 axial gegeneinander gesichert sein. Am Außenrad der Antriebsscheibe 20 ist ein Riemenkranz 22 für einen Flachriemen erkennbar. Anstelle dessen kann auch ein Riemenkranz für einen Keilriemen, einen Zahnriemen oder ein Kettenrad vorgesehen werden. Die Antriebsscheibe 20 hat weiterhin eine Nabe 23 mit Formschlußmitteln 24, die als Innensechskant ausgebildet sind. In die Hohlwelle 12 ist eine Torsionsfeder 31 eingeschoben, die aus einer Vielzahl von einzelnen Sechskantstäben besteht und insgesamt mit einem vorderen Ende 35 in die Formschlußmittel 16 am inneren Ende des Hohlraums 15 der Hohlwelle 12 eingreift und andererseits mit einem hinteren Ende 36 in die Formschlußmittel 24 der Antriebsscheibe 20 formschlüssig eingreift. Die Antriebsscheibe 21 ist dadurch einerseits gegenüber der Lagerhülse 17 reibungsarm drehbar gelagert, andererseits gegenüber dem Ende der Hohlwelle 12 nur unter Verdrehung der Torsionsfeder 31 zur Schwingungsdämpfung verdrehbar. Bei der Verdrehung der Torsionsfeder 31 wird eine Dämpfung infolge der relativen Oberflächenreibung der einzelnen Sechskantstäbe innerhalb des Stabbündels erzeugt, so daß die elastische Bewegung der Antriebsscheibe 20 gegenüber der Antriebswelle 13 gedämpft wird.

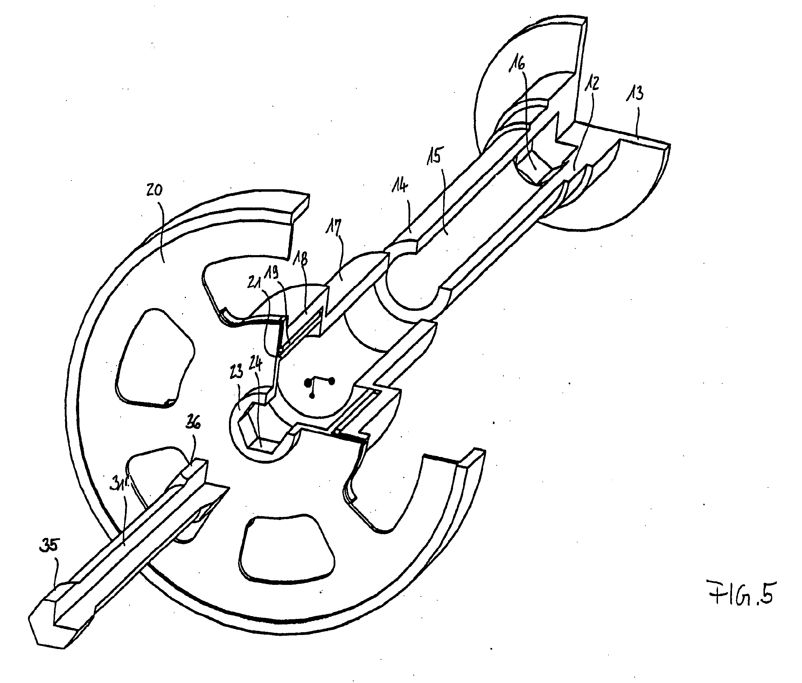

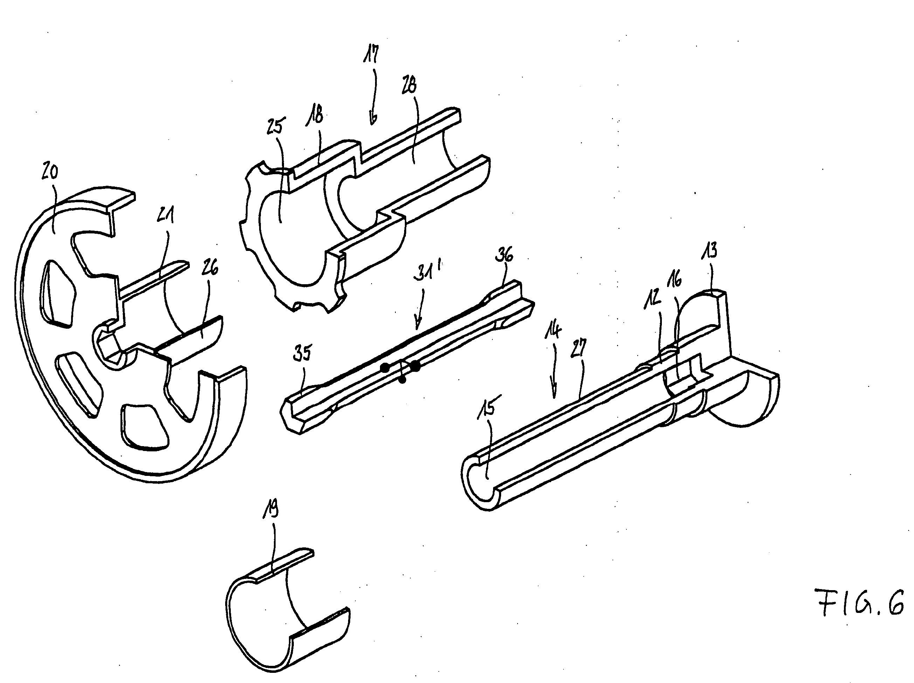

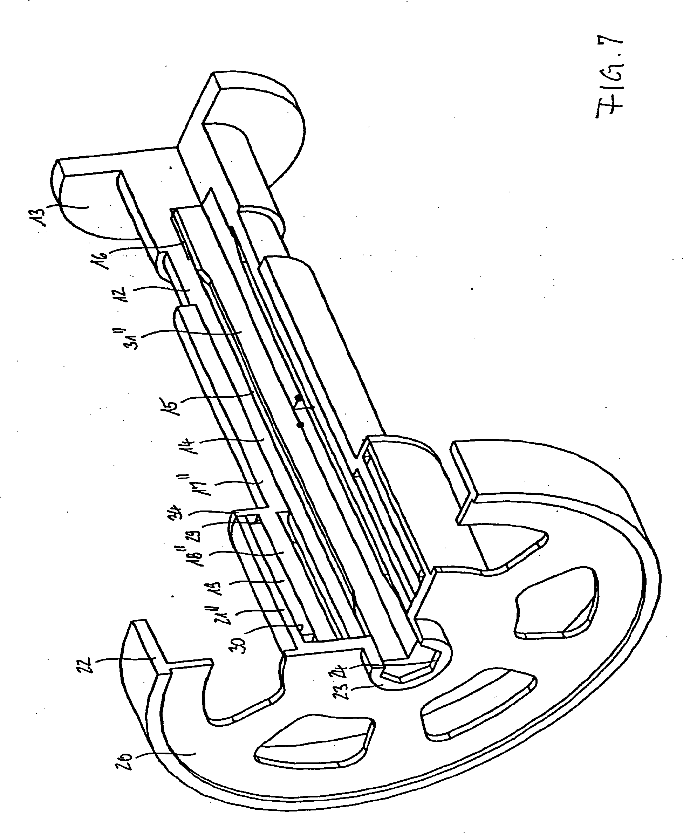

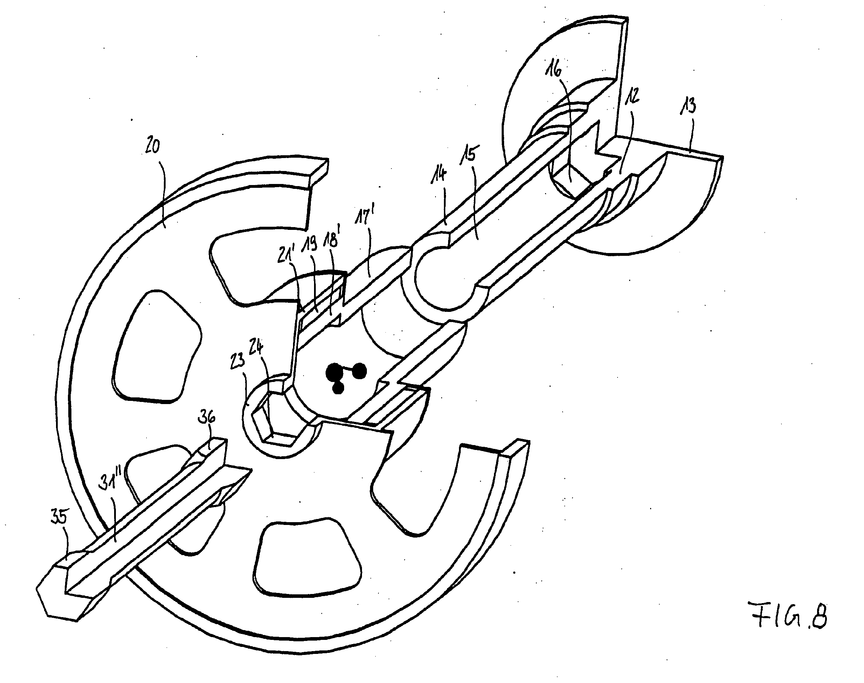

In Figur 2 sind gleiche Einzelheiten wie in Figur 1 mit gleichen Bezugsziffern bezeichnet. Hierbei ist insbesondere zu erkennen, daß die Formschlußmittel 16 am inneren Ende des Hohlraums 15 ebenso wie die Formschlußmittel 24 in der Nabe 23 der Antriebsscheibe 20 als Innensechskante ausgebildet sind, während die aus einzelnen Sechskantstäben 32 bestehende Torsionsfeder 31 insgesamt als Sechskant konfiguriert ist. Wie hier angedeutet ist, können die Lagerhülse 17 mit der Lagerbuchse 19 und die Antriebsscheibe 20 mit der Lagerhülse 21 vormontiert sein und axial gegeneinander gesichert sein. Die Lagerhülse 17 wird dann auf den Befestigungsabschnitt 14 der Hohlwelle 12 aufgeschraubt, schließlich wird das aus einzelnen Sechskantstäben 32 bestehende Stabbündel der Torsionsfeder 31 in die Anordnung axial eingeschoben, bis die Enden Formschluß mit den Formschlußmitteln 16 und den Formschlußmitteln 24 erlangen, und axial gesichert.

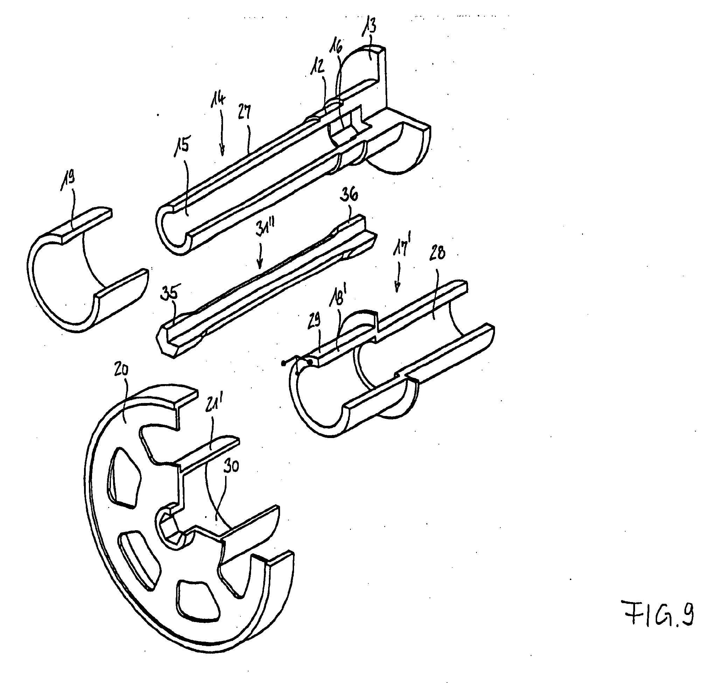

In Figur 3 sind gleiche Einzelheiten wie in den vorangehenden Figuren mit gleichen Bezugsziffern bezeichnet. Am Lagerabschnitt 18 der Lagerhülse 17 ist zusätzlich die innere Lagerfläche 25 und an der Lagerhülse 21 der Antriebsscheibe 20 zusätzlich die äußere Lagerfläche 26 bezeichnet. Zwischen beiden sitzt die Gleichlagerbuchse 19. Anstelle dieser könnte auch ein Nadellager verwendet werden. Weiterhin ist das Außengewinde 27 auf dem Befestigungsabschnitt 14 der Hohlwelle 12 und das Innengewinde 28 in der Lagerhülse 17 in ihrer Lage bezeichnet.

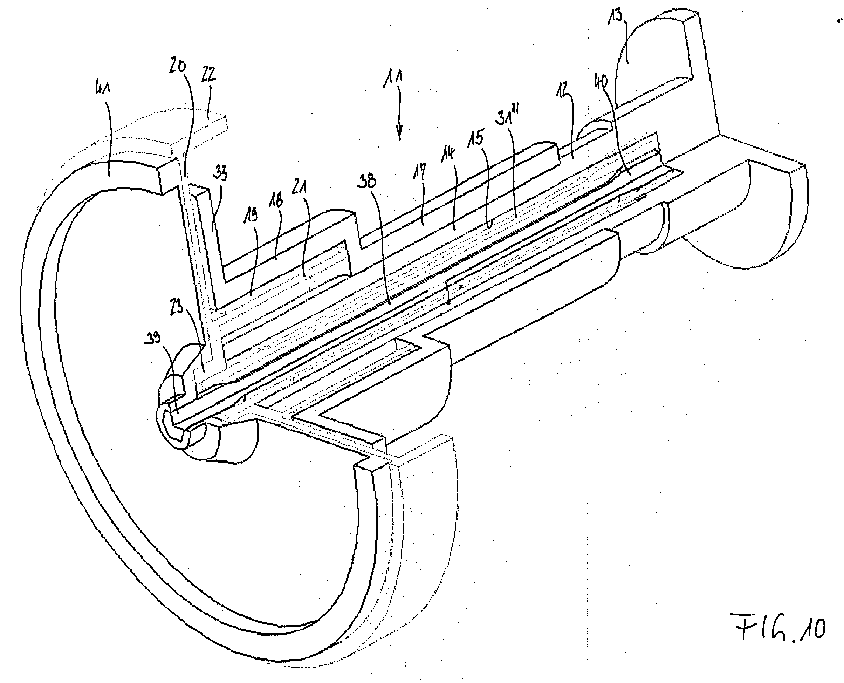

Die Figuren 4, 5 und 6, die eine zweite Ausführungsform eines erfindungsgemäßen Torsionsschwingungsdämpfers zeigen, entsprechen weitgehend den Figuren 1, 2 und 3, auf deren Beschreibung somit Bezug genommen werden kann. Gleiche Einzelheiten sind mit gleichen Bezugsziffern bezeichnet, während nur abgewandelte Einzelheiten mit einem einfachen Index' bezeichnet sind Abweichend von der ersten Ausführungsform ist die Torsionsfeder 31' hier als massiver Vollstab dargestellt. Die Dämpfungskräfte entstehen dabei aufgrund innerer Materialdämpfung bei der Torsion. Die Torsionsfeder 31' hat sechskantige Endabschnitte 35, 36 und ist im mittleren Bereich als runder Vollstab ausgeführt.

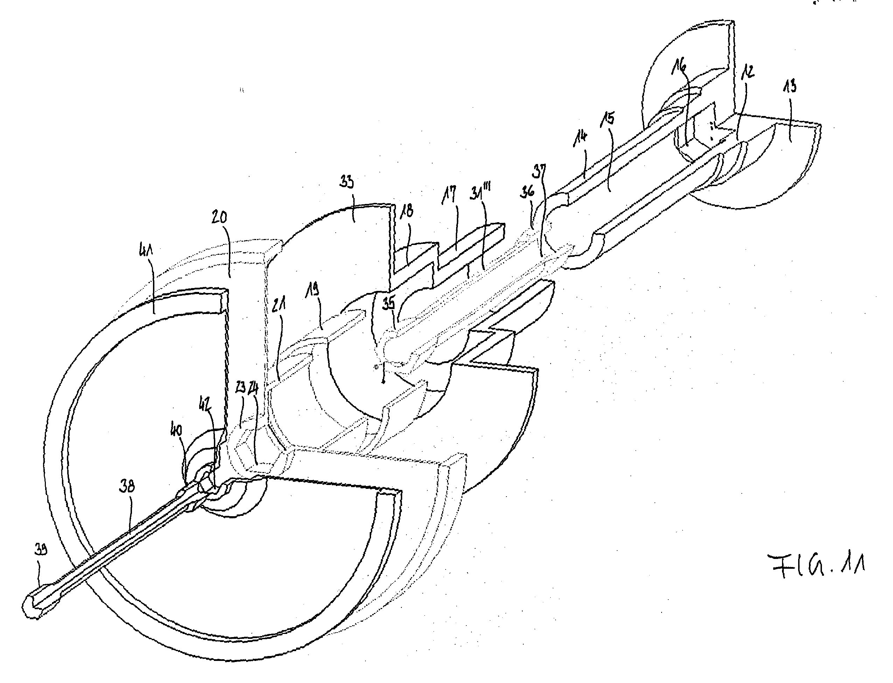

Die Figuren 7, 8 und 9, die eine dritte Ausführungsform eines erfindungsgemäßen Torsionsschwingungsdämpfers zeigen, entsprechen weitgehend den Figuren 4, 5 und 6, auf deren Beschreibung somit Bezug genommen werden kann und damit zugleich auf die Beschreibung der Figuren 1, 2 und 3. Einzelheiten, die nur abgewandelt sind, sind mit einem doppelten Index" bezeichnet. Gleiche Einzelheiten sind mit gleichen Bezugsziffern bezeichnet. Abweichend von der ersten und zweiten Ausführungsform liegt der Lagerabschnitt 18" der Lagerhülse 17" hier innen gegenüber der außenliegenden Lagerhülse 21" an der Antriebsscheibe 20". Damit bildet der Lagerabschnitt 18" eine außenliegende Lagerfläche 29 und die Lagerhülse 21" eine innenliegende Lagerfläche 30. Der Lagerabschnitt 18" wird von einem antriebswellenseitigen Flansch 34 begrenzt. Zwischen den beiden Lagerflächen 29, 30 sitzt die Gleitlagerbuchse 19". Anstelle derselben könnte auch ein Nadellager Verwendung finden.

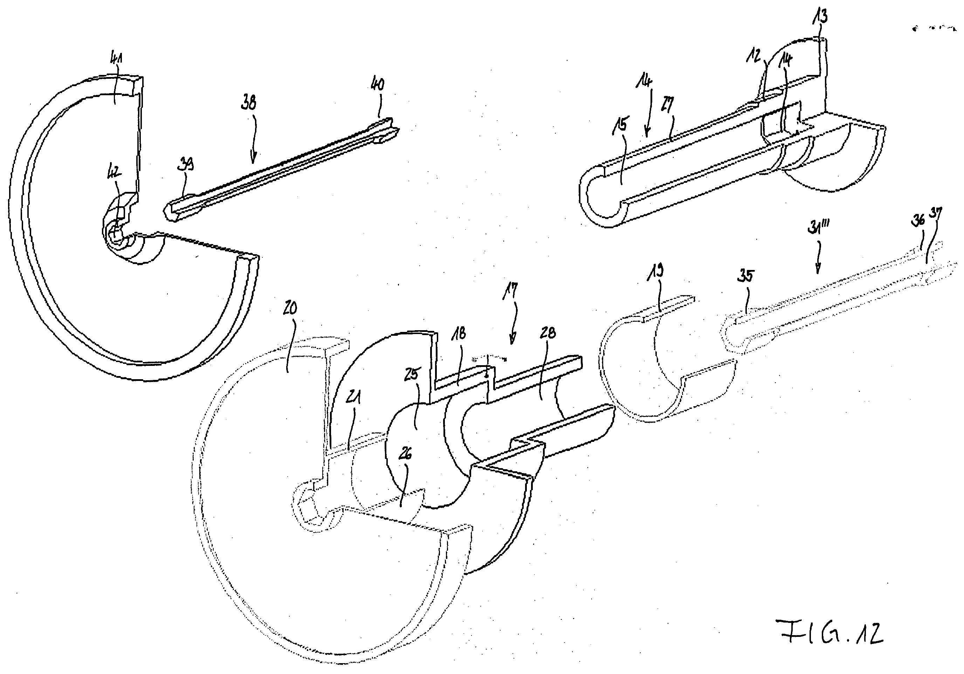

Die Figuren 10, 11 und 12, die eine vierte Ausführungsform eines erfindungsgemäßen Torsionsschwingungsdämpfers zeigen, entsprechen weitgehend den Figuren 4, 5 und 6, auf deren Beschreibung somit Bezug genommen werden kann und damit zugleich auf die Figuren 1, 2 und 3. Einzelheiten, die nur abgewandelt sind, sind mit einem dreifachen Index''' bezeichnet. Gleiche Einzelheiten sind mit gleichen Bezugsziffern bezeichnet, während nur abgewandelte Einzelheiten mit einem einfachen Index' bezeichnet sind Abweichend von der ersten und der zweiten Ausführungsform ist die Torsionsfeder 31''' hier als massiver Hohlstab dargestellt. Die Dämpfungskräfte entstehen dabei aufgrund innerer Materialdämpfung bei der Torsion. Die Torsionsfeder 31''' hat außen sechskantige Endabschnitte, ist am wellenseitigen Ende als Innensechskant 37 ausgebildet und ist im mittleren Bereich als innen und außen runder Hohlstab ausgeführt. Innerhalb des Hohlstabes liegt eine stabförmige weitere Torsionsfeder 38, die als massiver Vollstab ausgebildet ist und sechskantige Endabschnitte 39, 40 aufweist. Hierbei ist auf dem vorderen Ende 39, das aus der Antriebsscheibe 20 vorsteht, eine scheibenförmige Tilgermasse 41 mit einer zentralen Innensechskantöffnung 42 aufgesetzt, während das hintere Ende 40 formschlüssig im Innensechskant 37 der Torsionsfeder 31''' eingesetzt ist. Wie zu erkennen, liegt die weitere Torsionsfeder 38 nicht im Drehmomentfluß von der Antriebswelle 13 zur Antriebsscheibe 20 und ist somit frei torsionsschwingungsfähig gegenüber der Antriebswelle 13. Durch geeignete Auswahl der Federsteifigkeit der Torsionsfeder 38 und/oder der Größe der Tilgermasse 41 läßt sich die Eigenfrequenz dieser Tilgeranordnung einstellen, so daß bestimmte Frequenzen der Drehschwingung der Antriebswelle 13 unterdrückt werden können.

Nach einer vorteilhaften Ergänzung wird vorgeschlagen, daß eine Tilgeranordnung vorgesehen ist, die koaxial zur Antriebswelle 13 ausgebildet ist. Hiermit können ungünstige Eigenfrequenzbereiche der Antriebswelle bekämpft werden, wobei dies mit innerhalb des zur Verfügung stehenden Bauraumes unterzubringenden Mitteln möglich ist. Insbesondere wird im Zusammenhang mit einer als Hohlwelle ausgebildeten Torsionsfeder vorgeschlagen, daß die Tilgeranordnung eine weitere stabförmige Torsionsfeder 38 umfaßt, die in der Torsionsfeder 31 einliegt und deren wellenseitiges Ende mit der Antriebswelle zumindest mittelbar drehfest verbunden ist und deren anderes Ende eine frei drehschwingungsfähige Tilgermasse 41 trägt.

Bezugszeichenliste
- 11: Torsionsschwingungsdämpfer
- 12: Hohlraum
- 13: Antriebswelle
- 14: Befestigungsabschnitt
- 15: Hohlraum
- 16: Formschlußmittel
- 17: Lagerhülse
- 18: Lagerabschnitt
- 19: Gleitlagerbuchse
- 20: Antriebsscheibe
- 21: Lagerhülse
- 22: Riemenkranz
- 23: Nabe
- 24: Formschlußmittel
- 25: Lagerfläche (18)
- 26: Lagerfläche (21)
- 27: Außengewinde
- 28: Innengewinde
- 29: Lagerfläche (18')
- 30: Lagerfläche (21')
- 31: Torsionsfeder
- 32: Sechskantstab
- 33: Flansch
- 34: Flansch
- 35: Endabschnitt
- 36: Endabschnitt
- 37: Innensechskant
- 38: Torsionsfeder
- 39: Endabschnitt
- 40: Endabschnitt
- 41: Tilgermasse
- 42: Innensechskantöffnung

## Patentansprüche

1. Dekoppler für eine Antriebsscheibe (20), die mit einer Antriebswelle (13) über eine Torsionsfeder (31) zur Drehmomentübertragung verbunden ist, wobei das Ende der Antriebswelle (13) als Hohlwelle (12) ausgebildet ist,
die Torsionsfeder (31) stabförmig ist und mit einem Ende in der Antriebswelle (13) und mit dem anderen Ende an der Antriebsscheibe (20) drehfest festgelegt ist und
wobei mit der Antriebsscheibe (20) eine Lagerhülse (21) fest verbunden ist, die sich gegenüber dem freien Ende der Hohlwelle (12) frei drehbar abstützt.

2. Dekoppler nach Anspruch 1,
**dadurch gekennzeichnet,**
**daß** auf der Antriebswelle (13), insbesondere auf dem Bereich der Hohlwelle (12), eine Lagerhülse (17) festgelegt ist, die mit der Lagerhülse (21) der Antriebsscheibe (20) abstützend zusammenwirkt.

3. Dekoppler nach Anspruch 2,
**dadurch gekennzeichnet,**
**daß** ein Lagerabschnitt (18) der Lagerhülse (17) die innenliegende Lagerhülse (21) der Antriebsscheibe (20) außen umgibt.

4. Dekoppler nach Anspruch 2,
**dadurch gekennzeichnet,**
**daß** ein Lagerabschnitt (18') der Lagerhülse (17') in der außenliegenden Lagerhülse (21') der Antriebsscheibe (20') innen einliegt.

5. Dekoppler nach einem der Ansprüche 2 bis 4,
**dadurch gekennzeichnet,**
**daß** Lagermittel, insbesondere eine Gleitlagerbuchse (19) zwischen Lagerhülse (17) auf der Antriebswelle (13) und Lagerhülse (21) an der Antriebsscheibe (20) vorgesehen sind.

6. Dekoppler nach einem der Ansprüche 2 bis 5,
**dadurch gekennzeichnet,**
**daß** Axialsicherungsmittel zwischen der Lagerhülse (17) und der Antriebsscheibe (20) vorgesehen sind, die eine relative Drehbarkeit der beiden Teile zueinander zulassen. (ohne Figur)

7. Dekoppler nach einem der Ansprüche 2 bis 6,
**dadurch gekennzeichnet,**
**daß** die Lagerhülse (17) auf einen Befestigungsabschnitt (14) auf dem Bereich der Hohlwelle (12) der Antriebswelle (13) aufgeschraubt ist.

8. Dekoppler nach einem der Ansprüche 1 bis 7,
**dadurch gekennzeichnet,**
**daß** die Torsionsfeder (31') aus einem Stabbündel aus Einzelstäben, insbesondere Sechskantstäben (32) zusammengesetzt ist.

9. Dekoppler nach einem der Ansprüche 1 bis 7,
**dadurch gekennzeichnet,**
**daß** die Torsionsfeder (31') als Massivteil ausgeführt ist.

10. Dekoppler nach einem der Ansprüche 1 bis 9,
**dadurch gekennzeichnet,**
**daß** die Torsionsfeder (31) mit ihren axialen Endabschnitten (35, 36) mit Formschlußmitteln (16) in der Antriebswelle (13) und mit Formschlußmitteln (24) in der Antriebsscheibe (20), insbesondere mit Innensechskantlöchern, drehfest zusammenwirkt.

11. Dekoppler nach einem der Ansprüche 9 oder 10,
**dadurch gekennzeichnet,**
**daß** die Torsionsfeder (31) als Vollstab ausgeführt ist und insbesondere einen im Querschnitt runden Mittelabschnitt und vielkantige Endabschnitte hat.

12. Dekoppler nach einem der Ansprüche 9 oder 10,
**dadurch gekennzeichnet,**
**daß** die Torsionsfeder (31) als Hohlstab ausgeführt ist und insbesondere einen im Querschnitt runden Mittelabschnitt und vielkantige Endabschnitte hat.

13. Dekoppler nach einem der Ansprüche 1 bis 11,
**dadurch gekennzeichnet,**
**daß** eine Tilgeranordnung vorgesehen ist, die koaxial zur Antriebswelle (13) ausgebildet ist.

14. Dekoppler nach einem der Ansprüche 12 oder 13,
**dadurch gekennzeichnet,**
**daß** die Tilgeranordnung eine weitere stabförmige Torsionsfeder (38) umfaßt, die in der Torsionsfeder (31) einliegt und deren wellenseitiges Ende mit der Antriebswelle zumindest mittelbar drehfest verbunden ist und deren anderes Ende eine frei drehschwingungsfähige Tilgermasse (41) trägt.
